# EUROPÄISCHE PATENTSCHRIFT

(11) **EP 0 733 005 B1**
(45) Veröffentlichungstag und Bekanntmachung des Hinweises auf die Patenterteilung: **11.02.1998**
(21) Anmeldenummer: 95900709.7
(22) Anmeldetag: 11.11.1994
(51) Int. Cl.: B60T 8/36, F16K 31/06

(54) **ELEKTROMAGNETVENTIL, INSBESONDERE FÜR SCHLUPFGEREGELTE KRAFTFAHRZEUGBREMSANLAGEN**
SOLENOID VALVE, IN PARTICULAR A SOLENOID VALVE FOR VEHICLE BRAKE SYSTEMS WITH ANTI-SKID CONTROL
ELECTROVANNE, EN PARTICULIER POUR SYSTEMES DE FREINAGE AVEC ANTI-PATINAGE POUR VEHICULES AUTOMOBILES

(30) Priorität: 24.12.1993 DE 4344440
(43) Veröffentlichungstag der Anmeldung: 25.09.1996
(73) Patentinhaber: ITT Automotive Europe GmbH, 60488 Frankfurt (DE)
(72) Erfinder: GOOSSENS, André, F., L., B-2840 Rumst (BE); TIMMERMANS, Marc, B-1755 Leerbeek (BE); WUPPER, Hans, D-61381 Friedrichsdorf/Ts (DE)
(86) Internationale Anmeldenummer: EP9403734
(87) Internationale Veröffentlichungsnummer: WO9518030

(56) Entgegenhaltungen:
- EP-A- 0 411 469
- WO-A-94/10487
- DE-A- 3 529 134
- DE-A- 4 035 817
- DE-A- 4 133 536
- GB-A- 2 062 183

## Beschreibung

Die Erfindung bezieht sich auf ein Elektromagnetventil, insbesondere für schlupfgeregelte Kraftfahrzeugbremsanlagen, nach dem Oberbegriff des Anspruchs 1.

Bei einem bekannten Elektromagnetventil dieser Art (DE 35 29 134 A1) erfolgt beim Übergang des Ankers in die eine oder andere Endlage eine Dämpfung der Anschlaggeräusche mittels eines am Magnetanker angeordneten hydraulischen Dämpferkolbens, der einen Dämpferraum im Ventilgehäuse in zwei Kammern unterteilt. Der Dämpferkolben ist in beiden Bewegungsrichtungen wirksam, sofern Druckmittel aus der einen Kammer in die weitere Kammer über den Ringspalt am Dämpferkolben gedrosselt überströmen kann. Zusätzlich ist vorgeschlagen, im Dämpferkolben ein eine Drosselstelle aufweisendes Rückschlagventil anzuordnen, das abhängig von seiner Öffnungsrichtung die Dämpfung in die eine oder andere Ankerbewegungsrichtung gezielt beeinflußt. Überdies ist der bauliche Aufwand des Ventils für den Praxiseinsatz unangemessen hoch.

Aus der DE-A-40 35 817 ist bereits ein Elektromagnetventil bekannt geworden. Das Ventil hat einen längsbewegbaren Ventilschließkörper, der in einem druckmittelgefüllten Ventilraum mit einem Ventilsitz zusammenwirkt. Der Schaft des Ventilschließkörpers durchdringt einen gleichachsig verlaufenden, gegen den Ventilsitz erweiterten Bohrungsabschnitt eines Führungskörpers. Der Ventilschließkörper trägt ventilsitzseitig ein den erweiterten Bohrungsabschnitt des Führungskörpers wenigstens annähernd abschließendes Element, z.B. eine Ringscheibe. Hiermit ist ein Drosselrückschlagventil geschaffen, welches in der einen Bewegungsrichtung des Ventilschließkörpers den Abfluß von Druckmittel aus dem erweiterten Bohrungsabschnitt zumindest hindert, in der anderen Bewegungsrichtung den Zufluß von Druckmittel in den erweiterten Bohrungsabschnitt jedoch freigibt.

Der Erfindung liegt die Aufgabe zugrunde, das aus dem vorgenannten Stand der Technik hervorgegangene Elektromagnetventil baulich zu vereinfachen.

Erfindungsgemäß ist diese Aufgabe durch die Merkmale des Patentanspruchs 1 gelöst.

Bei dieser Ausbildung wird die Magnetankerbewegung hydraulisch durch das im Druckmittelraum innerhalb des Magnetankers eingespannte Druckmittelvolumen und reibungsbehaftet durch das am Ventilgehäuse angepreßte Dichtelement richtungsabhängig gedämpft, wodurch Ventilgeräusche vor allem bei der Öffnungsbewegung des Ventilschließgliedes gemindert sind. Die Wirkung des Dichtelementes und der Blende läßt sich so wählen, daß keine nachteilige Schaltverzögerung des Magnetventils auftritt. Vielmehr läßt sich durch die gedämpfte Öffnungsbewegung des Schließkörpers der Volumenstrom innerhalb des Magnetventils fein regulieren bis der Magnetanker am Ventilgehäuse in der vollständig geöffneten Ventilstellung hydraulisch gedämpft anliegt. Das durch die Öffnungsbewegung des Ventilkörpers im Magnetanker komprimierte Druckmittelvolumen trägt schließlich auch zu einer Erhöhung der Anpreßkraft auf die Dichtlippe des Dichtelementes bei, was der Dämpferwirkung förderlich ist.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand einer Zeichnung näher dargestellt und erläutert werden.

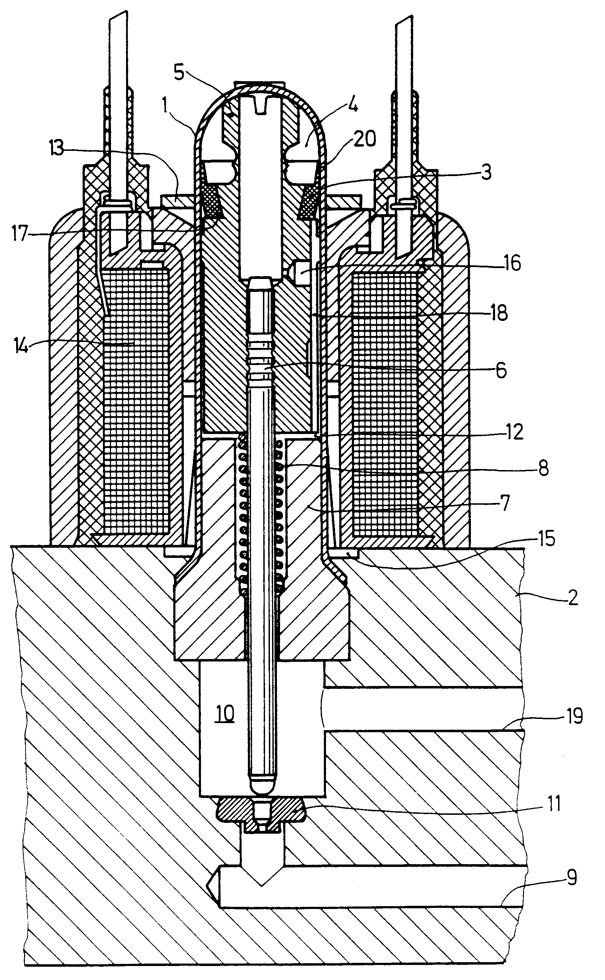

Die Figur 1 zeigt einen Querschnitt durch ein in der Grundstellung elektromagnetisch stromlos geöffnetes Magnetventil mit einer speziellen Ausgestaltung des Ventilgehäuses 1 als Ventilhülse im Ventilaufnahmekörper 2. Das Elektromagnetventil ist in einer erheblich vergrößerten Darstellung gezeigt. Das Ventilgehäuse 1 besteht aus einem hülsenförmigen, nur wenige Millimeter abmessenden Teil. Der Ventilaufnahmekörper 2 ist aus einer Stahllegierung hergestellt. Das als Ventilhülse ausgeführte Ventilgehäuse 1 wird aus unmagnetischem, rostfreiem Stahl durch ein Tiefziehverfahren hergestellt. Das Ventilgehäuse 1 nimmt im Hohlraum des Magnetankers 5 eine als Schließkörper wirksame Ventilnadel 6 auf. Die Ventilnadel 6 durchdringt den Magnetkern 7 konzentrisch. In einer abgesetzten Bohrung des Magnetkerns 7 befindet sich in koaxialer Anordnung gegenüber dem Magnetanker 5 eine Druckfeder 8, die über die Ventilnadel 6 gestülpt an der Stirnfläche des Magnetankers 5 anliegt. Im Bereich des in den Ventilaufnahmekörper 2 eingelassenen Druckmittel-Einlaßkanals 9 ist innerhalb einer im Ventilaufnahmekörper 2 abgesetzten Gehäusebohrung 10 der Ventilsitz 11 mittels einer Verstemmung gehalten. Weiterhin ist die Magnetspule 14 am Ventildom des Ventilgehäuses 1 mittels eines Greifrings 13 gesichert.

Das Tiefziehverfahren zur Fertigung des Ventilgehäuses 1 führt insbesondere bei Verwendung von rostfreiem Stahl zu einer Kaltverfestigung, so daß unter Wahrung eines von der Dünnwandigkeit der Ventilhülse abhängigen Wirkungsgrades des Magnetkreises, ein hochdruckbeständiges Ventilgehäuse 1 hergestellt ist. Da bei Verwendung des Elektromagnetventils für hydraulische Bremsanlagen der Innenraum der Ventilhülse vom Hochdruck vollkommen beaufschlagt wird, erweist sich die vorbeschriebene Herstellungsweise der Ventilhülse als äußerst vorteilhaft. Der Innenraum des Ventilgehäuses 1 ist durch ein am abbildungsgemäßen oberen Endabschnitt des Magnetankers 5 angebrachtes Dichtelement 3 in zwei Druckmittelräume 4, 12 unterteilt, die über eine im Magnetanker 5 angeordnete Blende 16 miteinander hydraulisch in Verbindung stehen. Die Blende 16 ist seitlich in den Magnetanker 5, unterhalb des Dichtelementes 3, eingebracht, so daß die Blendenbohrung senkrecht zur Ankerachse mit dem Druckmittelraum 4 eine Verbindung herstellt. Das Dichtelement 3 weist die Form einer Ringmanschette auf, die die Funktion eines Rückschlagventils inne hat. Der Magnetanker 5 ist zur Befestigung des Dichtelementes 3 mit einem Bund 17 versehen, der in Richtung der Ventilnadel 6 eine kegelförmige Einschnürung aufweist. Der kegelförmige Abschnitt des Magnetankers 5 sorgt für den sicheren Sitz des Dichtelementes 3. Damit begrenzt das Dichtelement 3 entlang der Wandung des Ventilgehäuses 1 den sich bis in die Magnetankerbohrung erstreckenden Druckmittelraum 4, sowie den sich entlang der Längsnut 18 erstreckende äußere Druckmittelraum 12. Über die den Magnetanker 5 radial durchdringende Bohrung der Blende 16 ist der sich bis in die Gehäusebohrung 10 erstreckende Druckmittelraum 12 mit dem Druckmittelraum 4 verbunden. Der Magnetanker 5 weist hierzu entlang seiner Außenkonturdie Längsnut 18 auf. Durch die Rückschlagventilfunktion des Dichtelementes 3 ist zusätzlich zur Wirkung der Blende 16 eine Druckmittelverbindung ausschließlich bei Bewegung der Ventilnadel 6 in Schließrichtung vom Druckmittelraum 12 zum Druckmittelraum 4 möglich.

Um unter Einwirkung höchster Betriebsdrücke die Befestigung des Ventilgehäuses 1 innerhalb des Ventilaufnahmekörpers 2 sicherzustellen, ist die Mantelfläche der Ventilhülse in ihrem kegelförmigen Bereich zwischen den Kontaktflächen des Magnetkerns 7 und des Ventilaufnahmekörpers 2 reibschlüssig und ggf. auch formschlüssig befestigt. Dies geschieht durch das Einstemmen einer ringförmig umlaufenden Nase 15 am Ventilaufnahmekörper 2, wodurch eine Anpassung der dünnwandigen Ventilhülse an die Oberflächenkontur des in den Ventilaufnahmekörper 2 eingesetzten Magnetkerns 7 vorliegt. Bei Einwirkung erhöhter Schubkräfte - infolge erhöhter Innendrücke - verhindert die Verstemmung einerseits das Austreten von Flüssigkeit und andererseits ein etwaiges Herausschlüpfen der Ventilhülse aus der Befestigung.

Im nachfolgenden ist die Wirkungsweise der Erfindung erläutert.

In der abbildungsgemäßen Darstellung stellt die in Offenposition befindliche Ventilnadel 6 eine hydraulische Verbindung zwischen dem Druckmitteleinlaßkanal 9 und dem Druckmittelauslaßkanal 19 her. Im speziellen Anwendungsfall für eine schlupfgeregelte hydraulische Bremsanlage schließt sich am Druckmitteleinlaßkanal 9 die Druckmittelversorgung, das heißt der Bremsdruckgeber bzw. die Hilfsdruckquelle an, während am Druckmittelauslaßkanal 19 der Verbraucher, das heißt die Radbremse angeschlossen ist. Der Magnetanker 5 ist elektromagnetisch nicht erregt, so daß die zwischen dem Magnetkern 7 und dem Magnetanker 5 angeordnete Druckfeder 8 den Magnetanker 5 am Ventilgehäuse 1 auf Anschlag hält. Das in der Gehäusebohrung 10 anstehende Druckmittel gelangt gleichzeitig über den außerhalb des Magnetankers 5 gelegenen Druckmittelraum 12, über die Längsnut 18 bis zur Blende 16 bzw. zum Dichtelement 3, so daß auch der im Magnetanker 5 gelegene Druckmittelraum 4 mit dem Druck in der Gehäusebohrung 10 beaufschlagt ist.

Bei einer elektromagnetischen Erregung des Ventils bewegt sich der Magnetanker 5 abwärts in Richtung des Magnetkerns 7, womit sich der Druckmittelraum 4 im Ventildom vergrößert und die Dichtlippe 20 des als Ringmanschette ausgebildeten Dichtelementes 3 nur unter einer vernachlässigbar kleinen Vorspannkraft entlang der Innenwandung des Ventilgehäuses 1 axial mit bewegt wird. Die Reibkräfte am Dichtelement 3 sind entsprechend gering, so daß die Ventilschließbewegung nicht behindert wird.

Sobald die Magnetspule 14 nicht mehr vom elektrischen Strom durchflossen ist, kehrt sich die Bewegungsrichtung des Magnetankers 5 um, so daß bei der Öffnungsbewegung der Ventilnadel 6 das im Druckmittelraum 4 des Ventildoms eingespannte Fluid abhängig vom Volumendurchsatz der Blende 16 verzögert in Richtung des außerhalb des Magnetankers 5 gelegenen Druckraums 12 verdrängt werden kann, wobei auch die Dichtlippe 20 durch den hydraulischen Vordruck im Ventildom vollflächig dichtend an die Innenwandung der Ventilhülse gepreßt wird und damit die Öffnungsbewegung im gewünschten Umfange verzögert. Folglich wird die Öffnungsgeschwindigkeit der Ventilnadel 6 im wesentlichen durch die Wahl der Blende 16 und die hiervon mitbeeinflußte Manschettenreibung am Ventilgehäuse 1 bestimmt. Durch die Verwendung der Blende 16 ist der hydraulische Widerstand gut beherrschbar, so daß der Einfluß von Temperatur- bzw. Viscositätsänderungen auf die Öffnungsgeschwindigkeit der Ventilnadel keinen nennenswerten Einfluß haben.

Insbesondere bei der Verwendung des Erfindungsgegenstandes für schlupfgeregelte Bremsanlagen, ergibt sich durch die gezielte Dämpfung des Ventilöffnungshubes eine besonders fein dosierbare Bremsdruckregelung sowie eine Reduzierung des Magnetankeranschlaggeräusches am Ventildom in der Endlage. Wegen des relativ kleinen Ankerhubs ist das Dichtelement 3 ausreichend steif zu gestalten, um die Verformung des Dichtelementes bei Volumenänderung im Druckraum 4 möglichst klein zu halten. Als günstiger Werkstoff für das Dichtelement eignet sich die Verwendung von Teflon, das die gewünschte Verschleißfestigkeit und Gleiteigenschaft aufweist.

Insbesondere bei den bereits erwähnten schlupfgeregelten hydraulischen Bremsanlagen kommt bei der Verwendung von in der Grundstellung elektromagnetisch stromlos offenen geschalteten Elektromagnetventilen (sogenannte stromlos offene Einlaßventile) der Reduzierung von Schaltgeräuschen eine besondere Bedeutung zu, da die hydraulische Druckdifferenz am Einlaßventil, das heißt zwischen Bremsdruckverbraucher und Bremsdruckversorgung erheblich größer ist als beim elektromagnetisch stromlos geschlossen Magnetventil (sogenanntes stromlos geschlossene Auslaßventil), bei dem der Verbraucherdruck (Bremsdruck) gegen näherungsweise Atmosphärendruck abgelassen wird. Überdies wird bei steigender Druckdifferenz am Einlaßventil und unter Beibehaltung einer konstanten Einschaltdauer des Erregerstroms (Pulslänge) die Ventilöffnungszeit länger, was zu großen Druckschwankungen und damit bei Ventilen herkömmlicher Bauart zur Geräuschzunahme führt.

Die Erfindung ist jedoch nicht auf das erläuterte Anwendungsbeispiel beschränkt und kann daher auch bei Bedarf für elektromagnetisch stromlos geschlossene Ventile zur Anwendung gelangen. Die Verwendung der Rückschlagventilfunktion des Dichtelementes in der einen oder anderen Hubrichtung des Magnetankers bleibt hierbei aufgrund den vorangegangenen Anregungen der Erfindung dem Fachmann zur Erzielung der gewünschten Wirkung freigestellt, so daß weitere Ausführungsbeispiele hierzu denkbar sind, die im einzelnen jedoch nicht dargestellt werden brauchen.

### Bezugszeichenliste

- 1: Ventilgehäuse
- 2: Ventilaufnahmekörper
- 3: Dichtelement
- 4: Druckmittelraum
- 5: Magnetanker
- 6: Ventilnadel
- 7: Magnetkern
- 8: Druckfeder
- 9: Druckmitteleinlaßkanal
- 10: Gehäusebohrung
- 11: Ventilsitz
- 12: Druckmittelraum
- 13: Greifring
- 14: Magnetspule
- 15: Nase
- 16: Blende
- 17: Bund
- 18: Längsnut
- 19: Druckmittelauslaßkanal
- 20: Dichtlippe

## Patentansprüche

1. Elektromagnetventil, insbesondere für schlupfgeregelte hydraulische Bremsanlagen, mit einem Ventilgehäuse (1), das mehrere die Funktion des Elektromagnetventils bestimmende Ventilbauteile, unter anderem einen am Magnetanker (5) angebrachten Schließkörper (6) und einen Magnetkern (7) aufweist, wobei der Schließkörper gegenüber einem Ventilsitz (11) sowie der Magnetanker (5) gegenüber dem Magnetkern (7) beweglich geführt sind, sowie mit einer die Betätigung des Magnetankers (5) beeinflussenden Magnetspule (14), um mittels des Schließkörpers die Druckmittelverbindung zwischen wenigstens einem Druckmitteleinlaßkanal (9) und einem Druckmittelauslaßkanal (19) im Ventil zu sperren oder zu öffnen, dadurch **gekennzeichnet**, daß zwischen dem Außenumfang des Magnetankers (5) und dem Innenumfang des Ventilgehäuses (1) ein Dichtelement (3) angeordnet ist, daß in Parallelschaltung zum Dichtelement (3) eine Blende (16) im Magnetanker (5) angeordnet ist, die eine permanente Druckmittelverbindung zwischen einem sich innerhalb des Magnetankers (5) erstreckenden Druckmittelraum (4) und einem außerhalb des Magnetankers (5) gelegenen Druckmittelraum (12) herstellt, und daß das Dichtelement (3) mit einer Dichtlippe (20) versehen ist, die ausschließlich in einer der beiden Bewegungsrichtungen des Magnetankers (5) eine nahezu unbehinderte hydraulische Verbindung zwischen dem sich innerhalb des Magnetankers (5) erstreckenden Druckmittelraum (4) und dem außerhalb zum Magnetanker (5) gelegenen Druckmittelraum (12) herstellt.

2. Elektromagnetventil nach Anspruch 1, dadurch **gekennzeichnet**, daß das Dichtelement (3) am Außenumfang des Magnetankers (5) befestigt ist, wobei die Dichtlippe (20) entlang dem Ventilgehäuse (1) anlegbar ist.

3. Elektromagnetventil nach Anspruch 1, dadurch **gekennzeichnet**, daß am Ventilgehäuse (1) eine konstante Eigenvorspannkraft der Dichtlippe (20) vorhanden ist, die um eine Zusatzkraft vermehrt oder vermindert ist, die aus einer zwischen dem ersten und dem zweiten Druckraum (4, 12) eingestellten Druckdifferenz gebildet ist und die eine auf die Innenwandung oder entgegengesetzt zur Innenwandung des Ventilgehäuses (1) gerichtete Normalkraftresultierende bewirkt, wobei abhängig vom Reibungskoeffizient zwischen Dichtlippe (20) und Ventilgehäuse (1) eine die Hubgeschwindigkeit des Magnetankers (5) beeinflussende Reibkraft am Dichtelement (3) mit unterschiedlicher Größe und Richtung angreift.

4. Elektromagnetventil nach Anspruch 3, dadurch **gekennzeichnet**, daß die aus der Druckdifferenz gebildete Zusatzkraft zwischen den beiden Druckmittelräumen (4, 12) durch die Blende (16) festgelegt ist.

5. Elektromagnetventil nach Anspruch 1, dadurch **gekennzeichnet**, daß die zwischen der Dichtlippe (20) und dem Ventilgehäuse (1) vorhandene Reibkraft in Richtung der Schließbewegung des Schließkörpers ein Minimum ist, wobei während der Ventilschließbewegung zwischen der Dichtlippe (20) und dem Ventilgehäuse (1) ein Druckmitteldurchlaß herstellbar ist, der den innerhalb des Magnetankers (5) gelegenen Druckmittelraum (4) mit dem außerhalb zum Magnetanker (5) gelegenen Druckmittelraum (12) verbindet.

6. Elektromagnetventil nach Anspruch 1, dadurch **gekennzeichnet**, daß in Richtung der Öffnungsbewegung des Schließkörpers die zwischen einer Dichtlippe (20) und dem Ventilgehäuse (1) vorhandene Reibkraft ein Maximum ist, wobei abhängig vom hydraulischen Durchsatz der Blende (16) das Druckmittel im Druckmittelraum (4) die Dichtlippe (20) gegen das Ventilgehäuse (1) preßt.

7. Elektromagnetventil nach Anspruch 6, dadurch **gekennzeichnet**, daß in der Öffnungsbewegung des Schließkörpers abhängig vom Volumenstrom durch die Blende (16) der Druckmitteldurchlaß zwischen dem Druckmitteleinlaßkanal (9) und dem Druckmittelauslaßkanal (19) reduziert ist.

8. Elektromagnetventil nach mindestens einem der vorhergehenden Ansprüche, dadurch **gekennzeichnet**, daß die Formänderung des Dichtelementes (3) kleiner ist als die vom Magnetankerhub abhängige Volumenänderung im Druckmittelraum (4) während der Ventil-Öffnungsbewegung.

9. Elektromagnetventil nach Anspruch 8, dadurch **gekennzeichnet**, daß das Dichtelement (3) aus einem Werkstoff hoher Steifigkeit, vorzugsweise aus Teflon hergestellt ist.

## Claims

1. Solenoid valve, in particular for slip-controlled hydraulic brake systems, including a valve housing (1) which accommodates a plurality of valve component parts defining the function of the solenoid valve, such as a closure member (6) fitted to the magnet armature (5) and a magnetic core (7), wherein the closure member is movable with respect to a valve seat (11) and the magnet armature (5) is movable with respect to the magnetic core (7), and including a magnet coil (14) which influences the operation of the magnet armature (5) in order to close or open the pressure fluid connection between at least one pressure fluid inlet duct (9) and a pressure fluid outlet duct (19) in the valve by way of the closure member,
**characterized** in that a sealing element (3) is interposed between the outside periphery of the magnet armature (5) and the inside periphery of the valve housing (1), in that, connected in parallel to the sealing element (3), an orifice (16) is arranged in the magnet armature (5) to establish a permanent pressure fluid connection between a pressure fluid chamber (4) disposed inside the magnet armature (5) and a pressure fluid chamber (12) disposed outside the magnet armature (5), and in that the sealing element (3) includes a sealing lip (20) which, only in one of the two directions of movement of the magnet armature (5), establishes an almost unhindered hydraulic connection between the pressure fluid chamber (4) disposed inside the magnet armature (5) and the pressure fluid chamber (12) disposed outside the magnet armature (5).

2. Solenoid valve as claimed in claim 1,
**characterized** in that the sealing element (3) is fixed to the outside periphery of the magnet armature (5), the sealing lip (20) being movable into abutment alongside the valve housing (1).

3. Solenoid valve as claimed in claim 1,
**characterized** in that a constant proper preloading force of the sealing lip (20) is provided on the valve housing (1) and is increased or reduced by an additional force resulting from a difference in pressure between the first and the second pressure chambers (4, 12) to cause a normal force resultant directed to the inside wall of the valve housing (1) or opposite to the inside wall thereof, and a friction force of varying magnitude and direction, which influences the lifting speed of the magnet armature (5), is applied to the sealing element (3) in response to the coefficient of friction between sealing lip (20) and valve housing (1).

4. Solenoid valve as claimed in claim 3,
**characterized** in that the additional force produced by the difference in pressure between the two pressure fluid chambers (4, 12) is determined by the orifice (16).

5. Solenoid valve as claimed in claim 1,
**characterized** in that the friction force provided between the sealing lip (20) and the valve housing (1) is a minimum in the direction of the closing movement of the closure member, and a pressure fluid passage can be constituted between the sealing lip (20) and the valve housing (1) during the valve closing movement to connect the pressure fluid chamber (4) disposed inside the magnet armature (5) to the pressure fluid chamber (12) disposed outside the magnet armature (5).

6. Solenoid valve as claimed in claim 1,
**characterized** in that the friction force provided between a sealing lip (20) and the valve housing (1) is a maximum in the direction of the opening movement of the closure member, the pressure fluid in the pressure fluid chamber (4) pressing the sealing lip (20) against the valve housing (1) depending on the rate of hydraulic fluid flow through the orifice (16).

7. Solenoid valve as claimed in claim 6,
**characterized** in that the pressure fluid passage between the pressure fluid inlet duct (9) and the pressure fluid outlet duct (19) is reduced in the opening movement of the closure member depending on the fluid flow through the orifice (16).

8. Solenoid valve as claimed in at least one of the preceding claims,
**characterized** in that the change in shape of the sealing element (3) is inferior to the change in fluid volume in the pressure fluid chamber (4), which is responsive to the magnet armature stroke, during the valve opening movement.

9. Solenoid valve as claimed in claim 8,
**characterized** in that the sealing element (3) is made of a high strength material, preferably, of Teflon.

## Revendications

1. Electrovanne, notamment pour système de freinage hydraulique à régulation du glissement, comprenant un boîtier de valve (1), qui comprend plusieurs éléments de valve déterminant le fonctionnement de l'électrovanne, entre autres un obturateur (6) monté sur l'armature mobile d'électroaimant (5) et un noyau d'électroaimant (7), l'obturateur étant mobile vis-à-vis d'un siège de valve (11), ainsi que l'armature mobile (5) vis-à-vis du noyau d'électroaimant (7), et comprenant une bobine d'électroaimant (14) exerçant son action sur l'actionnement de l'armature mobile (5), afin de bloquer ou d'ouvrir dans la valve, au moyen de l'obturateur, la liaison d'agent de pression entre au moins un conduit d'entrée d'agent de pression (9) et un conduit de sortie d'agent de pression (19), caractérisée en ce qu'un élément d'étanchéité (3) est disposé entre la périphérie extérieure de l'armature mobile (5) et la périphérie intérieure du boîtier de valve (1), en ce qu'un orifice calibré (16) est disposé dans l'armature mobile (5) en parallèle vis-à-vis de l'élément d'étanchéité (3), l'orifice calibré (16) assurant une liaison permanente d'agent de pression entre une chambre d'agent de pression (4) s'étendant à l'intérieur de l'armature mobile (5), et une chambre d'agent de pression (12) située à l'extérieur de l'armature mobile (5), et en ce que l'élément d'étanchéité (3) est pourvu d'une lèvre d'étanchéité (20) qui, exclusivement dans l'un des deux sens de déplacement de l'armature mobile (5), assure une liaison hydraulique pratiquement sans obstacle entre la chambre d'agent de pression (4) s'étendant à l'intérieur de l'armature mobile (5) et la chambre d'agent de pression (12) située à l'extérieur de l'armature mobile (5).

2. Electrovanne suivant la revendication 1, caractérisée en ce que l'élément d'étanchéité (3) est fixé à la périphérie extérieure de l'armature mobile d'électroaimant (5), la lèvre d'étanchéité (20) pouvant s'appliquer le long du boîtier de valve (1).

3. Electrovanne suivant la revendication 1, caractérisée en ce qu'il existe sur le boîtier de valve (1) une force propre constante de précontrainte de la lèvre d'étanchéité (20), augmentée ou diminuée d'une force supplémentaire qui est formée d'une différence de pression établie entre la première et la seconde chambres de pression (4, 12) et qui exerce une résultante de force normale dirigée vers la paroi intérieure ou dans le sens s'éloignant de la paroi intérieure du boîtier de valve (1), une force de frottement qui influe sur la vitesse de course de l'armature mobile d'électroaimant (5) agissant sur l'élément d'étanchéité (3) avec une intensité différente et dans un sens différent, d'une manière dépendant du coefficient de frottement entre la lèvre d'étanchéité (20) et le boîtier de valve (1).

4. Electrovanne suivant la revendication 3, caractérisée en ce que la force supplémentaire se présentant entre les deux chambres d'agent de pression (4, 12) et formée par la différence de pression est déterminée par l'orifice calibré (16).

5. Electrovanne suivant la revendication 1, caractérisée en ce que, dans le sens du mouvement de fermeture de l'obturateur, la force de frottement existant entre la lèvre d'étanchéité (20) et le boîtier de valve (1) est minimale, ce qui, pendant le mouvement de fermeture de valve, peut assurer, entre la lèvre d'étanchéité (20) et le boîtier de valve (1), un passage d'agent de pression qui relie la chambre d'agent de pression (4) située à l'intérieur de l'armature mobile d'électroaimant (5) et la chambre d'agent de pression (12) située à l'extérieur de l'armature mobile (5).

6. Electrovanne suivant la revendication 1, caractérisée en ce que, dans le sens du mouvement d'ouverture de l'obturateur, la force de frottement existant entre une lèvre d'étanchéité (20) et le boîtier de valve (1) est maximale, de sorte que l'agent de pression contenu dans la chambre d'agent de pression (4) applique la lèvre d'étanchéité (20) sur le boîtier de valve (1) d'une manière dépendant du débit hydraulique de l'orifice calibré (16).

7. Electrovanne suivant la revendication 6, caractérisée en ce que, dans le mouvement d'ouverture de l'obturateur, le débit d'agent de pression entre le conduit d'entrée d'agent de pression (9) et le conduit de sortie d'agent de pression (19) est réduit d'une manière dépendant du débit volumique passant par l'orifice calibré (16).

8. Electrovanne suivant au moins l'une des revendications précédentes, caractérisée en ce que la déformation de l'élément d'étanchéité (3) est inférieure, pendant le mouvement d'ouverture de valve, à la variation de volume qui se présente dans la chambre d'agent de pression (4) et qui dépend de la course de l'armature mobile d'électroaimant.

9. Electrovanne suivant la revendication 8, caractérisée en ce que l'élément d'étanchéité (3) est en une matière à rigidité élevée, de préférence en Téflon.
